# EUROPÄISCHE PATENTANMELDUNG

(11) **EP 1 844 954 A1**
(43) Veröffentlichungstag der Anmeldung: **17.10.2007**
(21) Anmeldenummer: 07007464.6
(22) Anmeldetag: 12.04.2007
(51) Int. Cl.: B60B 31/02

(54) **Verfahren und Vorrichtung zum Einspeichen eines Rades**

(30) Priorität: 15.04.2006 DE 102006017749
(71) Anmelder: Golz, Daniel, 33449 Langenberg (DE)
(72) Erfinder: Golz, Daniel, 33449 Langenberg (DE)
(74) Vertreter: Rehberg Hüppe + Partner

(57) **Zusammenfassung**

Bei einem Verfahren zum Einspeichen eines Rades aus einer Felge, einer Mehrzahl Nippeln und einer Nabe mit eingefädelten Speichen werden die eingefädelten Speichen sich kreuzend geflochten und die Nippel durch Felgenlöcher hindurch auf die Enden der Speichen lose aufgeschraubt. Die Nabe mit den eingefädelten Speichen wird in Drehung versetzt und dabei die Speichen unter Fliehkrafteinwirkung radial von der Nabe abstehend ausgerichtet. Die radial abstehenden rotierenden Speichen werden aufgefangen und alle Speichen sich radseitig kreuzend reihenweise gegenläufig gleichzeitig geflochten. Die Nabe mit den geflochten gehaltenen Speichen wird in den Innenraum der Felge eingebracht. Mehrere Nippel werden auf die zugehörigen Speichenenden gleichzeitig aufgeschraubt. Eine zur Durchführung des Verfahrens geeignete Vorrichtung weist eine Einlegestation (Einlegeebene 8) zum Spannen und Drehen der Nabe (29), eine Flechtstation (Flechtebene 10) zum gleichzeitigen gegenläufigen Kreuzen der Speichenreihen der beiden Radseiten und eine Einspeichstation (Einspeichebene 9) zum Einlegen der Felge (22) und zum Aufschrauben der Nippel (60) in drei voneinander beabstandet vorgesehenen Arbeitsebenen (8, 9, 10) auf. Es ist eine axiale Schlitze (31) aufweisende Kronenanordnung (11) zum Fangen der Speichen (33, 34, 35, 36) vorgesehen und zum Verbringen der Einheit aus Nabe (29) und Speichen (33, 34, 35, 36) in die drei Arbeitsebenen (8, 9, 10) ausgebildet.

## Beschreibung

### TECHNISCHES GEBIET DER ERFINDUNG

Die Erfindung bezieht sich auf ein Verfahren und eine Vorrichtung zum Einspeichen eines Rades aus einer Felge, einer Mehrzahl Nippel und einer Nabe mit eingefädelten Speichen. Das Einspeichen eines Rades geschieht dadurch, dass zunächst eine Einheit aus einer Nabe und den Speichen hergestellt wird. Dabei werden die Speichen in die Löcher der beiden Flansche der Nabe eingeschoben und bis zum jeweiligen Speichenkopf durchgezogen. Dabei werden 4 Speichenreihen gebildet. Auf der einen Seite der Radebene im Bereich des einen Flansches der Nabe werden die Speichen abwechselnd von innen und von außen durch die Löcher gefädelt und so die erste und die zweite Speichenreihe gebildet. Das Gleiche geschieht auf der anderen Radseite. Dabei werden die dritte und die vierte Speichenreihe gebildet. Die Erfindung lässt sich für Drahtspeichenräder aller Art anwenden, beispielsweise für Vorderräder, aber auch für angetriebene Hinterräder von Fahrrädern, Rollstühlen und dergleichen. In der vorliegenden Erfindung geht es um das Einspeichen eines Rades, also um den Zusammenbau von Felge, Nabe, Speichen und Nippeln, wobei die Nippel auf die mit Gewinde versehenen Enden der Speichen nur um einige wenige Umdrehungen aufgedreht werden, so dass jedenfalls noch keine feste und endgültige Spannung in den Speichen entsteht, jedoch die zugehörige Relativlage zwischen Speiche, Nippel und Felge mit der jeweiligen Kreuzung der Speichen untereinander sowie gegebenenfalls eine gewisse Spannung der Speichen, jedoch mit gegebenenfalls Seiten- und/oder Höhenschlägen der Felge festgelegt ist. Es versteht sich, dass zum Zusammenbau eines fertigen Rades diesem Einspeichvorgang ein Zentrier- und Spannvorgang und dabei gegebenenfalls ein Korrekturvorgang für einen Höhen- und/oder Seitenschlag folgen muss.

### STAND DER TECHNIK

Aus der DE 26 28 361 A1 ist ein Verfahren und eine Anlage zum Einspeichen und Spannen eines Rades aus einer Felge, einer Mehrzahl Nippeln und einer Nabe mit eingefädelten Speichen bekannt. Dabei wird die Nabe mit den eingefädelten Speichen festgespannt und in Drehung versetzt. Die Speichen richten sich unter Fliehkrafteinwirkung radial von der Nabe abstehend aus. Die radial abstehenden rotierenden Speichen werden mit einer ebenfalls angetriebenen, heb- und senkbar gesteuerten einzelnen Krone aufgefangen, die in vier Ebenen versetzt endende Einschnitte aufweist. Es ist eine Greif- und Fördereinrichtung vorgesehen, die von oben an der Einheit aus Nabe und Speichen angreifende Schiebeplatten und Haken aufweist, um den Transport der Einheit durch verschiedene in einer horizontalen Ebene nebeneinander angeordnete Bearbeitungsstationen zu ermöglichen. Auf diese Weise gelangt die Einheit aus Nabe und Speichen in eine Kreuzungseinrichtung, in der die Speichen der vier beabstandet gehaltenen Speichenreihen von auf Ringen gelagerten Fangärmchen erfasst werden. Die Fangärmchen sind an den Ringen radial verschiebbar angeordnet. Durch gegenläufiges Drehen der Ringe werden die Speichen gleichzeitig gekreuzt und von einer weiteren einzelnen Krone mit in vier Ebenen versetzt endenden Einschnitten im freien Fall der Speichen übernommen. Mit Hilfe der Greif- und Fördereinrichtung gelangt die Einheit aus Nabe und gekreuzten Speichen in eine Befestigungsstation, in der die Nabe erneut festgespannt wird. Die Einheit kommt hier erstmalig mit der Felge in Kontakt. Um die Speichen in die Felgenlöcher einzuführen, werden die Speichen mit einer Hochdrückeinrichtung zwischenzeitlich in einen gebogenen Zustand überführt. Mehrere Nippel werden gleichzeitig auf die zugehörigen Speichenenden mit ortsfest angeordneten Schraubern aufgeschraubt.

Aus der DE 26 21 296 A1 ist ein Verfahren und eine Anlage zum Einspeichen und Spannen eines Rades aus einer Felge, einer Mehrzahl Nippeln und einer Nabe mit eingefädelten Speichen bekannt. Dabei wird die Nabe mit den eingefädelten Speichen festgespannt und in Drehung versetzt. Die Speichen richten sich unter Fliehkrafteinwirkung radial von der Nabe abstehend aus. Die radial abstehenden rotierenden Speichen werden mit auf Ringen gelagerten, ebenfalls angetriebenen Fangärmchen in vier Ebenen aufgefangen. Die Ringe mit den Fangärmchen werden in ihren vier Ebenen gegeneinander gegenläufig verdreht, sodass die Speichen der vier Speichenreihen reihenweise gleichzeitig durch Drehung ausgerichtet werden. In diesem Zustand werden die Speichen mit einer einseitig angeordneten, anheb- und absenkbaren einzelnen Krone, die in vier Ebenen versetzt endende Einschnitte aufweist, übernommen. Dann wird der Drehantrieb ausgeschaltet. Die Einheit aus Nabe und Speichen wird in eine gesonderte Befestigungsstation der Anlage verbracht und dort erneut festgespannt. Die Einheit kommt hier erstmalig mit der Felge in Kontakt. Mehrere Nippel werden gleichzeitig auf die zugehörigen Speichenenden mit Schraubern aufgeschraubt.

Ein Verfahren und eine Vorrichtung zum Einspeichen eines Rades ist aus der DE 195 32 429 A1 bekannt. Dabei ist eine Aufnahmeeinrichtung zum ungefähren Festlegen der Achse der Nabe, drei Führungsrollen für eine drehbare Lagerung der Felge, ein Positionieranschlag für das mit Gewinde versehne Ende der Speiche sowie ein axial in Aufdrehrichtung verfahrbarer Schrauber zum Aufdrehen der Nippel um einige wenige Umdrehungen an einem gemeinsamen Rahmen vorgesehen. Ein angetriebener Lochsucher für die Löcher in der Felge ist in der gemeinsamen Arbeitsachse des Schraubers und des Positionieranschlages verfahrbar und aus dieser Arbeitsachse herausfahrbar am Rahmen vorgesehen. Die Nabe wird mit den eingefädelten Speichen einerseits und die Felge andererseits zunächst in eine ungefähr konzentrische Relativlage zueinander gebracht. Die Felge wird in Dreipunktauflagerung so um ihre Achse gedreht, dass eines der Löcher in der Felge in eine solche Position gebracht wird, bei der das Loch mit der gemeinsamen festgelegten Arbeitsachse eines Schraubers und eines Positionieranschlages für das mit Gewinde versehene Ende der Speiche fluchtet. Die Speiche wird von Hand mit ihrem mit Gewinde versehenen Ende auf den Positionieranschlag gedrückt und der Nippel durch das Loch in der fixierten Felge hindurch mit dem Schrauber auf das mit Gewinde versehene Ende der Speiche aufgedreht. Mit der Felge und den anderen Speichen und Nippeln wird entsprechend verfahren. Der Lochsucher wird in einer Ebene parallel zu der Laufradebene bewegt. Damit bleibt die Schräglage der Speichen relativ zur Laufradebene unberücksichtigt. Insbesondere bei Tiefbett-Hohlkammerfelgen werden die Durchgangslöcher entsprechend der Schräglage der Speichen versetzt zu den Nippellöchern gebohrt. Der Lochsucher hat dann Schwierigkeiten, in die Durchgangslöcher und/oder die Nippellöcher einzufahren. Es besteht die Gefahr, dass er auf dem jeweiligen Rand des betreffenden Loches aufsetzt, so dass ein Fehler entsteht. Selbst wenn der Lochsucher letztendlich das Nippelloch erreicht, steht die Arbeitsachse in einem Winkel zu der Achse des Nippelloches und damit zu der Achse des Nippels, so dass dessen Ergreifen mit der Klinge des Schraubers zu einem Abschalten der Vorrichtung führen kann.

Aus der DE 197 39 365 C2 ist eine Vorrichtung zum Einspeichen eines Rades bekannt, bei dem die Felge in ihrer Radebene drehbar um eine vertikale Achse in drei Rolllagern gelagert ist. Es ist ein an der Schraubstelle in den Innenraum der Felge einschwenkbarer Positionieranschlag vorgesehen, der einseitig offen ausgebildet ist, damit das Ende jeder Speiche manuell auf den Positionieranschlag gedrückt werden kann und so der Nippel aufgeschraubt werden kann. Es ist ein in der Arbeitsachse verfahrbarer Schrauber vorgesehen, mit dem die Nippel einzeln nacheinander aufgeschraubt werden. Der Schrauber weist einen Lochsucher auf. Um den durch den Lochversatz der Felge verursachten Abweichungen entgegenzuwirken ist eine relativ zu der durch die drei Rolllager festgelegten Radebene höhenveränderlich geführte Führungsschiene zur Aufnahme des Schraubers und des Lochsuchers vorgesehen, die auf zwei in Richtung der Führungsschiene beabstandet angeordneten Lagern schwenkbar gelagert ist. Das der Schraubstelle abgekehrte Lager der Führungsschiene ist auf zwei in Reihe angeordneten hinteren Zylindern maschinenfest abgestützt. Das der Schraubstelle zugekehrte Lager der Führungsschiene ist auf zwei in Reihe angeordneten vorderen Zylindern abgestützt, wobei die vorderen Zylinder auf einem Stellmotor abgestützt sind. Der Lochsucher ist um eine Querachse schwenkbar gegenüber der Führungsschiene angeordnet und mit einer den Lochversatz ermittelnden Messeinrichtung verbunden. Der Stellmotor ist über das den Lochversatz wiedergebende Signal der Messeinrichtung zum Ausgleich des Lochversatzes durch Verschwenken der Führungsschiene betätigbar. Bei der bekannten Vorrichtung wird der Schrauber und der Lochsucher auf einer Führungsschiene gelagert und relativ zu dieser Führungsschiene bewegt, wobei die Führungsschiene selbst in ihrer Neigung relativ zur Laufradebene verstellbar ist. Damit wird eine Anpassung an die Schräglage der Speichen relativ zur Laufradebene erreicht. Es genügt im allgemeinen, für die Führungsschiene drei unterschiedliche Stellungen vorzusehen, nämlich eine Mittelstellung, in der die Führungsschiene mit der Laufradebene fluchtet, und zwei daran jeweils anschließende Stellungen, in denen je eine Schräglage zu der Laufradebene erreicht wird, und zwar derart, dass die Führungsschiene mit der Schräglage der Speichen der einen und der anderen Laufradseite fluchtet. Zwar müsste die Führungsschiene bzw. der Lochsucher und der Schrauber mit seinem vorderen Ende gleichsam gelenkig geführt werden. Dies ist aus konstruktiven Gründen nicht möglich. Insoweit werden zwei Lager für die Führungsschiene gebildet, von denen das erste Lager, welches der Schraubstelle zugekehrt ist, auf vorderen Zylindern abgestützt, während das hintere Lager ebenfalls auf zwei hinteren Zylindern abgestützt ist. Durch die Betätigung dieser Zylinder können die drei beschriebenen Stellungen der Führungsschiene und damit der Arbeitsachse des Lochsuchers und des Schraubers gleichsam voreingestellt werden. Es versteht sich, dass an einer realen Felge dann immer noch Toleranzen auftreten, die durch das Bohren der Durchgangslöcher und/oder der Nippellöcher verursacht sind. Diese Toleranzen werden als Lochversatz bezeichnet. Der Lochsucher ist zusätzlich um eine Querachse zur Arbeitsachse der Führungsschiene schwenkbar und mit einer diesen Lochversatz ermittelnden Messeinrichtung verbunden. Die vorderen Zylinder für die gelenkige Auflagerung der Führungsschiene sind auf einem Stellmotor abgestützt, der von dem über die Messeinrichtung ermittelten Lochversatz gesteuert wird. Dies bedeutet, dass die Schräglage oder Relativlage der Arbeitsachse zur Laufradebene über den Stellmotor zum Ausgleich der Toleranzen noch verändert, d. h. nachgestellt wird. Dies geschieht an jedem einzelnen Loch, so dass hiermit die Arbeitsachse individuell auf jedes Loch eingestellt wird. Dies erhöht die Betriebssicherheit erheblich. Jede Speiche muss beim Einspeichen eines Rades manuell mit anderen Speichen gekreuzt, auf den Positionieranschlag gedrückt, dabei fluchtend zur Arbeitsachse gehalten werden. Infolgedessen ist die Leistung, die mit einer solchen Vorrichtung erbracht werden kann, begrenzt. Eine gut eingearbeitete Bedienungsperson kann damit etwa 35 bis 40 Räder pro Stunde einspeichen.

### AUFGABE DER ERFINDUNG

Der Erfindung liegt die Aufgabe zugrunde, ein Verfahren und eine Vorrichtung der eingangs beschriebenen Art aufzuzeigen, die bei Felgen beliebiger Gestaltung, insbesondere auch bei Tiefbett-Hohlkammerfelgen, verlässlich, problemlos und mit vergleichsweise erhöhter Leistung arbeitet.

### LÖSUNG

Die Aufgabe der Erfindung wird erfindungsgemäß mit den Merkmalen der unabhängigen Patentansprüche 1 und 5 gelöst.

### BESCHREIBUNG DER ERFINDUNG

Das Verfahren zum Einspeichen eines Rades setzt für jedes Rad eine Felge, einer Mehrzahl Nippel und einer Nabe mit eingefädelten Speichen ein. Die eingefädelten Speichen werden sich kreuzend geflochten, indem jede Speiche über zwei benachbarte Speichen und unter der dritten benachbarten Speiche zweier Speichenreihen gekreuzt wird. Die Nippel werden durch Felgenlöcher hindurch von außen auf die Enden der Speichen lose aufgeschraubt. All dies geschieht in bekannter Weise. Bei dem neuen Verfahren wird die Nabe mit den eingefädelten Speichen in Drehung versetzt und dabei die Speichen unter Fliehkrafteinwirkung radial von der Nabe abstehend ausgerichtet. Die radial abstehenden rotierenden Speichen werden mit einer Kronenanordnung aus mindestens zwei gegenläufig verfahrbaren und die Speichen beidseitig der Radebene einschließenden Kronen aufgefangen. Die Einheit aus festgespannter Nabe und den Speichen wird mit der Kronenanordnung in eine Flechtebene transportiert, in der alle Speichen sich radseitig kreuzend reihenweise gegenläufig gleichzeitig geflochten werden. Die Nabe mit den geflochten gehaltenen Speichen wird in den Innenraum der Felge eingebracht. Anschließend werden mehrere Nippel auf die zugehörigen Speichenenden gleichzeitig aufgeschraubt. Das Verfahren wird in drei vertikal übereinander angeordneten Arbeitsebenen durchgeführt. Eine untere Einspeichebene dient zunächst dem Einlegen der Felge. Eine mittlere Einlegeebene dient dem Einlegen der Einheit aus Nabe mit eingefädelten Speichen. In der Einlegeebene wird die Nabe rotierend angetrieben, so dass sich die Speichen unter Fliehkrafteinfluss radial in vier Ebenen nach außen aufspreizen. Jede Speichenreihe besetzt eine Ebene. Die Speichen werden in der durch die Rotation gebildeten Stellung während der Rotation durch die Kronenanordnung aufgefangen. Dabei werden die Speichen in vier Ebenen fixiert. Die freien Enden der Speichen der vier Speichenreihen sind in Richtung der vertikalen Drehachse der Nabe axial zueinander versetzt. Die Drehung der Nabe wird beendet. In dieser Relativlage wird die Einheit aus Nabe und radial und axial gespreizten Speichen in die dritte Arbeitsebene, die Flechtebene, angehoben. In der Flechtebene werden alle Speichen mehr oder weniger gleichzeitig an Fangärmchen übergeben. Die Fangärmchen befinden sich anfangs mit ihren Aufnahmestellen in vier axial übereinander beabstandet angeordneten Ebenen. Der Höhenversatz der Ebenen entspricht dem Höhenversatz der Speichen nach dem Fangen. Die Speichen werden in den Fangärmchen locker, d. h. in Speichenrichtung verschiebbar gehalten. Anschließend erfolgt der Flechtvorgang. Alle Speichen werden relativ zueinander gegenläufig tangential und axial bewegt und dabei gekreuzt. Eine Speiche einer Reihe wird tangential über zwei benachbarte Speichen und dann axial unter der dritten benachbarten Speiche hindurch geflochten, sodass das bekannte Kreuzungsbild entsteht. Die geflochtene Relativlage der Speichen wird festgehalten. Während der Rotation der Nabe in der Einlegeebene und dem Flechten in der Flechtebene wird die Felge unter Drehung ausgemessen und relativ zu einem Schrauber sowie relativ zu dem Ventilloch stillgesetzt. Dies geschieht an einem Schrauber, der zum Aufschrauben der Nippel der ersten Speichenreihe bestimmt ist. Die Speichen werden gebogen, um einerseits die Entfernung der beiden Enden einer Speiche zu verkürzen und so die Speichen ohne Berührung der inneren Oberfläche der Felge in den Innenraum der Felge einbringen zu können. Durch den Biegevorgang werden auch die axialen Abstände der freien Enden der Speichen verkleinert. Das Einbringen der Speichen in den Innenraum der Felge geschieht in Winkelrelation der Speichen zu den Löchern in der Felge. Die Speichen der ersten und der zweiten Speichenreihe stehen der einen Lochreihe an der Felge gegenüber. Die Speichen der dritten und der vierten Speichenreihe stehen der anderen Lochreihe an der Felge gegenüber. Im Bereich des Ventilloches der Felge ergibt sich ein maximaler Freiraum zwischen einer Speiche der ersten Speichenreihe und einer Speiche der vierten Speichenreihe. Dann folgt der Aufschraubvorgang der Nippel. Es werden gleichzeitig mindestens vier Nippel auf die Speichen von vier Speichenreihen aufgeschraubt. Dann wird die Felge um 80° weitergedreht und es werden gleichzeitig die nächsten vier Nippel aufgeschraubt. Nach neun Schritten sind die 36 Nippel aufgeschraubt und das Rad eingespeicht.

Die geflochtenen Speichen werden vor dem Einbringen in den Innenraum der Felge gemeinsam für jede Radseite in einen gebogenen Zustand überführt. Dies verkürzt den radialen und axialen Abstand der freien Enden der Speichen mit dem Gewindeansatz von den Speichenköpfen in den Löchern der Nabe. Die Gefahr des Verkratzens der inneren Oberfläche der Felge ist beseitigt und die Speichen sind zum Aufschrauben der Nippel vorausgerichtet. Die freien Enden der Speichen werden gruppenweise durch Biegung fluchtend zu den Arbeitsachsen einer Mehrzahl von Schraubern vorausgerichtet. Durch einen zweiten Biegevorgang, der im Bereich der freien Enden der Speichen ansetzt, kann die endgültige genaue Ausrichtung zu den Arbeitsachsen der Schrauber erfolgen.

Die Nabe mit den eingefädelten Speichen wird in der Einlegeebene in eine Aufnahmeeinrichtung eingelegt. Die Felge wurde vorzugsweise vorher bereits in der zur Einlegeebene höhenversetzten Einspeichebene eingelegt. Das Flechten wird in einer zur Einlegeebene und zur Einspeichebene höhenversetzten Flechtebene durchgeführt. Die drei Arbeitsebenen sind vorzugsweise so angeordnet, dass die Einspeichebene unter, die Einlegeebene etwas höher und die Flechtebene noch weiter höher angeordnet sind. Die Achse der Nabe ist dabei vertikal ausgerichtet gehalten.

Die Vorrichtung zum Einspeichen eines Rades aus einer Felge, einer Mehrzahl Nippeln und einer Nabe mit eingefädelten Speichen weist eine Aufnahmeeinrichtung zum Festlegen der Achse der Nabe, mindestens drei Führungsrollen für eine drehbare Lagerung der Felge in der Einspeichebene mit etwa horizontal angeordneter Radebene, einen in eine Schraubstelle einbringbaren Positionieranschlag für das mit Gewinde versehene Ende der Speiche sowie einen in einer Arbeitsachse in Aufdrehrichtung verfahrbaren Schrauber zum Aufdrehen eines Nippels auf das Ende einer Speiche mit einem angetriebenen Lochsucher für die Löcher in der Felge auf, der in der gemeinsamen Arbeitsachse des Schraubers und des Positionieranschlages verfahrbar und aus dieser Arbeitsachse herausbringbar vorgesehen ist. Es sind eine Einlegestation zum Spannen und Drehen der Nabe, eine Flechtstation zum gleichzeitigen gegenläufigen Kreuzen der Speichenreihen der beiden Radseiten und eine Einspeichstation zum Einlegen der Felge und zum Aufschrauben der Nippel in drei voneinander beabstandet vorgesehenen Arbeitsebenen angeordnet. Eine axiale Schlitze aufweisende Kronenanordnung ist zum Fangen der Speichen und zum Verbringen der Einheit aus Nabe und Speichen in die drei Arbeitsebenen vorgesehen. Die Kronen der Kronenanordnung sind axial, also vertikal, in einer Art Schließbewegung aufeinander zu und auch auseinander fahrbar vorgesehen. In der Schließstellung fixieren die Kronen die Winkellagen sämtlicher Speichen, und zwar sowohl in der gekreuzten als auch der rein radialen Stellung. In der Offenstellung läuft der Flechtvorgang ab. Die Kronenanordnung kann auch gemeinsam in die verschiedenen Arbeitsebenen verbracht werden. Dabei dient die Kronenanordnung dem Transport der jeweiligen Einheit aus Nabe und Speichen.

Die Kronenanordnung weist mindestens zwei vertikal gegenläufig verfahrbare Kronen auf, deren axiale Schlitze so gestaltet und angeordnet sind, dass einerseits vier unterschiedliche Ebenen für die Fixierung der vier Speichenreihen nach dem Fangen und andererseits eine fünfte Ebene zur Fixierung der geflochtenen Stellung gebildet werden. Die Antriebe der beiden Kronen sind gekoppelt, sodass sie winkelgetreu zueinander rotieren. Die Drehzahl ist variabel und steuerbar.

In der Einlegestation sind eine an der Nabe angreifende Spanneinrichtung für die Einheit aus Nabe und eingefädelten Speichen und ein Drehantrieb für die Spanneinrichtung vorgesehen. Die Spanneinrichtung wirkt ausdrücklich auf die Nabe, und nicht etwa auf die Achse in der Nabe, ein, um die Einheit aus Nabe und Speichen in Rotation zu versetzen. Die Drehzahl des Drehantriebes ist steuerbar bzw. regelbar und kann an die Drehzahl der Kronen angepasst werden. Es sind also separat steuerbare Drehantriebe für die Spanneinrichtung, für die Kronen und für die Felge vorgesehen.

In der Flechtstation sind Fangärmchen zur Übernahme der Speichen in der radialen Stellung vorgesehen. Die Fangärmchen sind zu vier Gruppen entsprechend der vier Speichenreihen gemeinsam tangential und axial zur Achse der Nabe bewegbar. Die Bewegung der zweiten und der dritten Speichenreihe kann zusammengefasst werden. Die Speichen der ersten Speichenreihe werden in den Löchern der Flansche der Nabe beim Flechten im Gegenuhrzeigersinn verschwenkt. Die Speichen der zweiten Speichenreihe werden in den Löchern der Flansche der Nabe beim Flechten im Uhrzeigersinn verschwenkt. Die Speichen der dritten Speichenreihe werden in den Löchern der Flansche der Nabe beim Flechten im Uhrzeigersinn verschwenkt. Die Speichen der vierten Speichenreihe werden in den Löchern der Flansche der Nabe beim Flechten in Gegenuhrzeigersinn verschwenkt. Dies trifft für eine Sicht auf die Radebene von einer Seite des Rades her zu. Bei Ansicht von der anderen Seite des Rades ist es umgekehrt.

Es sind eine erste Messvorrichtung zum Erfassen der Winkellage der ersten und der zweiten Speichenreihe in rotierendem Zustand und eine zweite Messvorrichtung zum Erfassen der Winkellage der Felge mit ihrem Ventilloch vorgesehen. Die erste Messvorrichtung kann auf der oberen Krone angeordnet sein. Die zweite Messvorrichtung ist radial außen ein der Einspeichebene relativ zur Felge angeordnet.

Die Fangärmchen in der Flechtstation sind an Flechthebeln angeordnet, die entsprechend der vier Speichenreihen an mindestens drei Lagerringen gelagert sind. Jeder Flechthebel ist tangential und axial bewegbar.

Der Positionieranschlag weist eine geteilte Prismenanordnung auf. Die Teilprismen sind in Richtung der Speichen beabstandet positioniert und axial gegenläufig verfahrbar angeordnet. Auf diese Weise kann der zweite Biegevorgang realisiert werden. Die Endbereiche der Speichen mit den Gewindestücken werden so gebogen, dass die Endbereiche der Speichen mit der jeweiligen Arbeitsachse des zugehörigen Schraubers fluchten. Die den Positionieranschlag bildende Prismenanordnung kann ein geteiltes Nippelführungsloch aufweisen, um eine zusätzliche Zentrierwirkung auf den Nippel auszuüben.

Die Kronenanordnung weist vorteilhaft zwei drehfest miteinander verbundene untere Kronen und eine obere Krone auf, wobei die obere Krone axial zwischen die beiden unteren Kronen einfahrbar ausgebildet ist. Dabei kann durch eine Schließbewegung der Kronen zueinander der erste Biegevorgang auf die Speichen ausgeübt werden.

Die Drehantriebe für die Kronen der Kronenanordnung sind auf eine im Winkel einander zugeordnete Relativstellung einsteuerbar und synchron drehbar ausgebildet. Dabei befinden sich die axialen Schlitze in den Kronen immer auf gleicher Winkellage über den Umfang. Die synchron miteinander verbundenen Kronen der Kronenanordnung sind in Umfangsrichtung gemeinsam um 5° bewegbar. In Umfangsrichtung benachbarte Speichenenden schließen bekanntlich mit der Achse der Nabe einen Winkel von 10° (360°/36 Speichen) ein. Die Bewegung um 5° liegt damit genau zwischen den Endpunkten der 10°. Sie kann aber auch an anderer Stelle platziert sein.

Die Fangärmchen in der Flechtstation sind paarweise gegeneinander federnd gelagert und zum Flechten der Speichen einer Speichenreihe über zwei in Umfangsrichtung benachbarte Speichen und unter einer weiteren in Umfangsrichtung benachbarten Speiche hindurch gesteuert bewegbar.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Ansicht der Vorrichtung zum Einspeichen in einer bevorzugten Ausführungsform mit einigen Elementen.
- **Fig. 2**: zeigt eine Ansicht der Vorrichtung gemäß Fig. 1 mit noch mehr Elementen.
- **Fig. 3**: zeigt eine perspektivische Teilansicht von Elemente der Vorrichtung im Mittelbereich.
- **Fig. 4**: zeigt eine perspektivische Ansicht der rotierenden Einheit aus Nabe und Speichen zwischen den auseinander gefahrenen Kronen der Kronenanordnung.
- **Fig. 5**: zeigt eine perspektivische Ansicht der beiden unteren Kronen der Kronenanordnung.
- **Fig. 6**: zeigt eine perspektivische Ansicht der teilweise zusammengefahrenen Kronen der Kronenanordnung mit den gefangenen Speichen.
- **Fig. 7**: zeigt eine perspektivische Ansicht des Flechters mit den Flechthebeln und den Fangärmchen.
- **Fig. 8**: zeigt eine perspektivische Teilansicht der Flechthebel und der Fangärmchen in Ausgangsstellung vor der Übergabe der Speichen.
- **Fig. 9**: zeigt eine perspektivische Ansicht eines einzelnen Flechthebels mit einem Fangärmchen.
- **Fig. 10**: zeigt eine perspektivische Ansicht wesentlicher Elemente in der Einspeichebene.
- **Fig. 11**: zeigt eine Seitenansicht des Rolllagers und des Antriebes zum Drehen der Felge.
- **Fig. 12**: zeigt eine perspektivische Ansicht eines Schraubers.
- **Fig. 13**: zeigt eine perspektivische Ansicht einer geteilten Prismenanordnung.
- **Fig. 14**: zeigt eine perspektivische Ansicht des Bereichs der Spitze eines Schraubers.

### FIGURENBESCHREIBUNG

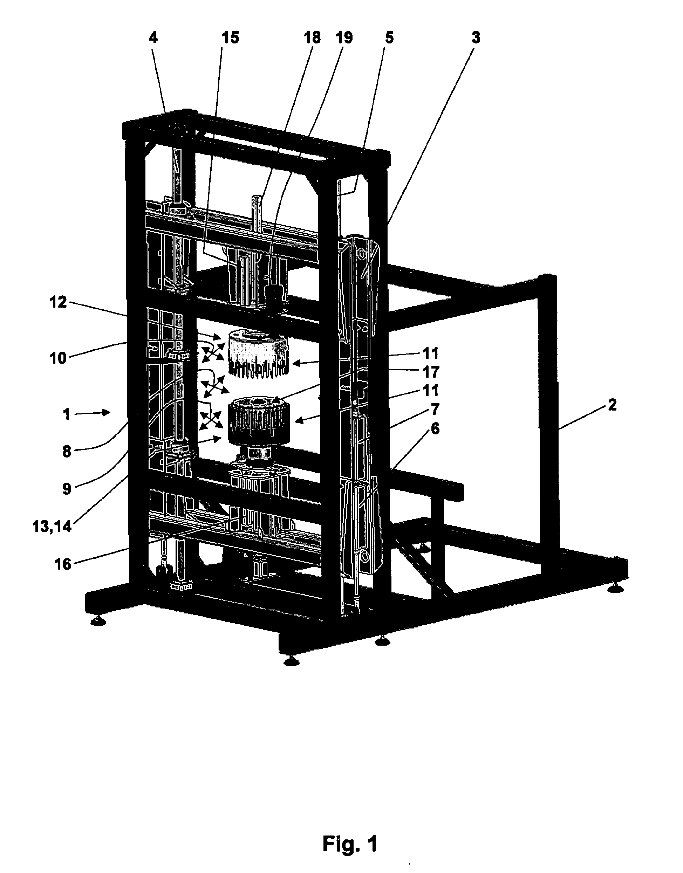

In **Fig. 1** ist eine bevorzugte Ausführungsform der Vorrichtung 1 mit einigen Elementen dargestellt, um zunächst einmal eine Übersicht über die Vorrichtung 1 zu gewinnen. Die Vorrichtung 1 weist einen gestellartigen Rahmen 2 auf, in dem ein Schlitten 3 an Führungsstangen 4 und 5 vertikal bewegbar ist. Für diese Vertikalbewegung des Schlittens 3 in dem Rahmen 1 sind auf jeder Seite des Rahmens zwei in Reihe geschaltete Pneumatikzylinder 6, 7 vorgesehen. In Fig. 1 sind nur die Pneumatikzylinder 6 und 7 auf einer Seite erkennbar. Die beiden Pneumatikzylinder 6 und 7 sind mit ihren Zylinderböden gekoppelt. Aber auch eine exakte Reihenanordnung wäre möglich. In Fig. 1 ist erkennbar, dass die Kolbenstange des Pneumatikzylinders 6 ausgefahren ist, während die Kolbenstange des Pneumatikzylinders 7 nicht ausgefahren ist. Dies bedeutet, dass sich der Schlitten 3 in einer mittleren Einlegeebene 8 befindet, die durch eine Darstellung gekreuzter Pfeile verdeutlicht ist. Diese Einlegeebene ist auf mittlerer Höhe am Rahmen 1 gebildet bzw. vorgesehen. Unterhalb der Einlegeebene 8 befindet sich eine Einspeichebene 9, die ebenfalls durch eine gekreuzte Doppelpfeildarstellung verdeutlicht ist. Schließlich gibt es eine Flechtebene 10, die oberhalb der mittleren Einlegeebene 8 angeordnet und verdeutlicht ist. Die drei Arbeitsebenen 8, 9, 10 sind jeweils mit vertikalem Abstand zueinander und damit übereinander vorgesehen und gebildet, um in jeder Arbeitsebene spezifische Arbeitsschritte auszuführen bzw. Elemente einer Vorrichtung anzuordnen, die beim Einspeichen eingesetzt werden.

Im Mittelbereich des Schlittens 3 ist eine Kronenanordnung 11 untergebracht. Die Kronenanordnung weist hier eine obere Krone 12 und zwei untere Kronen 13, 14 auf. Die Kronen 13 und 14 sind ineinander geschachtelt angeordnet und besitzen damit unterschiedliche Durchmesser. Der Durchmesser der oberen Krone 12 ist so festgelegt, dass er zwischen den Durchmessern der unteren Kronen 13 und 14 liegt, so dass die Kronen 12, 13, 14, die in Fig. 1 in auseinander gefahrenem Zustand dargestellt sind, ineinander gefahren werden können. Ein Zylinder 15 dient dazu, die obere Krone 12 relativ zum Schlitten 3 vertikal zu verfahren. Ein Zylinder 16 dient dazu, die unteren Kronen 13 und 14 gemeinsam relativ zum Schlitten 3 vertikal zu verfahren. Es ist eine Aufnahmeeinrichtung 17 für eine Einheit aus Nabe mit eingefädelten Speichen angeordnet. Die Aufnahmeeinrichtung 17 ist so ausgebildet, dass eine solche Einheit mit der Achse der Nabe in eine buchsenartige Vertiefung eingelegt werden kann. Die Aufnahmeeinrichtung 17 besitzt eine Gegenplatte (nicht dargestellt), die über einen Zylinder 18 vertikal bewegbar und spannbar ist, so dass auf diese Weise die Nabe der Einheit festgespannt werden kann, wie es für die Aufbringung eines Drehmoments zum Drehantrieb der Nabe erforderlich ist. Es ist ein nicht dargestellter Drehantrieb für die Aufnahmeeinrichtung 17 vorgesehen, mit dessen Hilfe die Nabe mit den eingefädelten Speichen in Rotation um eine Vertikalachse durch die Kronenanordnung 11 in Drehung versetzt werden kann. Auch die obere Krone 12 kann rotierend angetrieben werden. Hierzu dient ein Antriebsmotor 19. Entsprechend ist auch ein Antriebsmotor für den Drehantrieb der beiden unteren Kronen 13, 14 vorgesehen (nicht dargestellt). Die Motore für den Drehantrieb der Aufnahmeeinrichtung 17, der oberen Krone 12 und der unteren Kronen 13 und 14 sind steuerbar bzw. regelbar ausgebildet, wie nachfolgend noch erläutert wird.

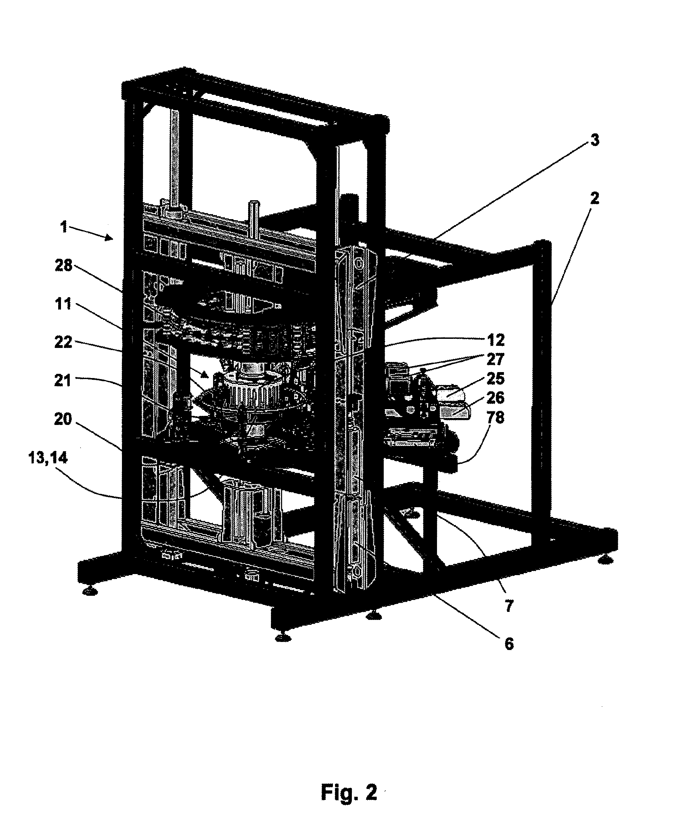

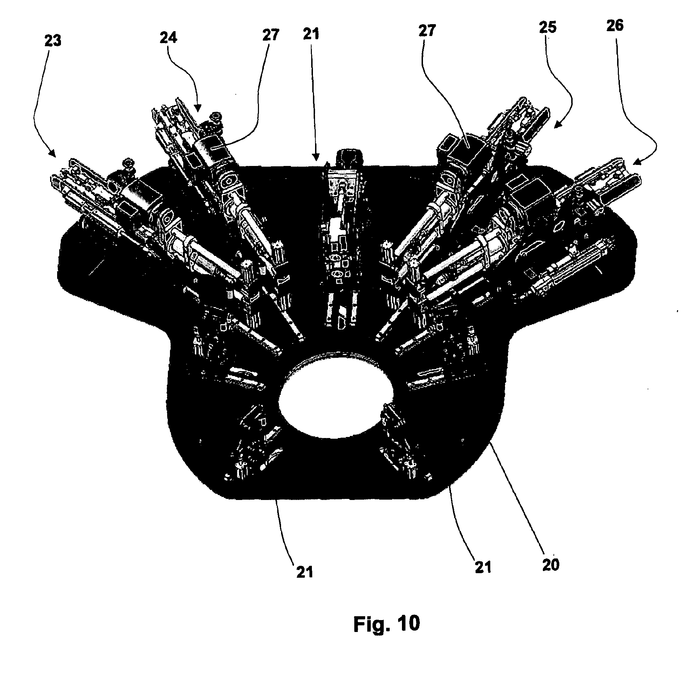

**Fig. 2** zeigt die gleiche perspektivische Ansicht auf die Vorrichtung 1 gemäß Fig. 1, wobei zur Verdeutlichung zusätzlich weitere Elemente dargestellt sind. Zunächst ist im Unterschied zu Fig. 1 zu erkennen, dass auch die beiden Pneumatikzylinder 6 mit eingefahrener Kolbenstange dargestellt sind. Dies bedeutet, dass der Schlitten 3 in die untere Arbeitsebene, die Einspeichebene 9, gefahren ist. Man erkennt in der Einspeichebene 9 eine dort auf dem Rahmen 2 ortsfest gelagerte Grundplatte 20, auf der über den Umfang verteilt fünf Rolllager 21 zur drehbaren Aufnahme einer Felge 22 angeordnet sind. Auch die Kronenanordnung 11 mit den Kronen 12, 13 und 14 befindet sich in zusammengefahrenem Zustand in der Einspeichebene 9, also in einer Relativlage, in der die Speichen fixiert relativ zur Felge 22 gehalten und die Nippel durch die Löcher der Felge auf die Enden der Speichen aufgeschraubt werden. Hierzu dienen insgesamt vier Schrauber 23, 24, 25 und 26, die in entsprechendem Winkelabstand und in Zuordnung zu den Löchern der Felge auf der Grundplatte 20 angeordnet sind. In Fig. 2 sind nur die Schrauber 25 und 26 gut erkennbar. Alle Schrauber 23, 24, 25 und 26 an der Grundplatte 20 sind aus **Fig. 10** übersichtlich entnehmbar. Jeder Schrauber 23, 24, 25 und 26 ist mit je einem eigenen Motor 27 für den Drehantrieb einer Schrauberklinge ausgestattet. Zum radialen Einfahren bzw. Ausfahren der Schrauber dient je ein Zylinder. Ein solcher Zylinder 78 des Schraubers 26 ist in Fig. 2 erkennbar. Ansonsten zeigt Fig. 2 einen Flechter 28, der in der Flechtebene 10 angeordnet ist. Der Flechter 28 dient dazu, die Speichen in eine sich kreuzende geflochtene Stellung zu verbringen. Aus der bisherigen Beschreibung wird auch bereits erkennbar, dass die Kronenanordnung 11 dazu dient, die Einheit aus Nabe und Speichen in die verschiedenen Arbeitsebenen übereinander zu transportieren, also gleichsam den Transport zwischen den Ebenen zu bewirken. Dies erfolgt in Abstimmung auf eine Steuerung der Pneumatikzylinder 6 und 7 und damit eine Bewegung des Schlittens 3 in vertikaler Richtung.

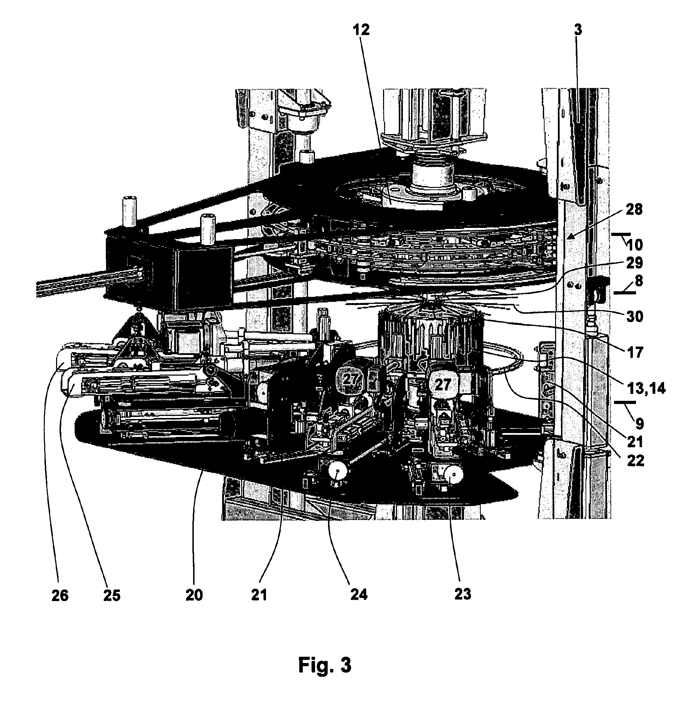

**Fig. 3** zeigt eine perspektivische Ansicht wesentlicher Elemente der Vorrichtung 1 in vergrößernder Detaildarstellung. Zur Verdeutlichung sind hier noch einmal die Einspeichebene 9 mit der Felge 22, die darüber befindliche Einlegeebene 8 und die wiederum darüber befindliche Flechtebene 10 dargestellt. Man erkennt, dass sich in der Aufnahmeeinrichtung 17 eine Nabe 29 mit radial abstehenden Speichen 30 befindet. Dies bedeutet, dass die Nabe 29 mit dem Antrieb der Aufnahmeeinrichtung 17 in Rotation versetzt worden ist, so dass sich die in den Löchern der beiden Flansche der Nabe 29 lose hängenden Speichen 30 jeweils unter Fliehkrafteinwirkung radial ausrichten. Die unteren Kronen 13, 14 können zu diesem Zeitpunkt stillstehend vorgesehen oder mit einer Relativdrehzahl zu den Speichen 30 angetrieben sein. Die obere Krone 12 befindet sich axial nach oben gefahren etwa im Bereich des Flechters 28, so dass die Speichen 30 mit der Nabe 29 völlig frei und ungehindert drehen können.

In Fig. 3 ist auch die Grundplatte 20 erkennbar, die unterhalb der Einspeichebene 9 und in Relation dazu fest am Rahmen 2 angeordnet ist. Es ist hier von hinten der Schrauber 23, der Schrauber 24 sowie die beiden Schrauber 25 und 26 erkennbar. Der Schrauber 23 dient zum Aufschrauben der Nippel auf die Speichen 30 der ersten Speichenreihe. Wenn man davon ausgeht, dass das zu erstellende Rad 36 Speichen aufweist, so umfasst die erste Speichenreihe neun Speichen, die im Bereich des oben liegenden Flansches der Nabe 29 durch die Nabenlöcher von innen nach außen eingefädelt bzw. durchgeschoben sind, so dass die Köpfe dieser Speichen nach innen zeigen, während die Speichen selbst den oberen Flansch der Nabe 29 außen überdecken. Der Schrauber 24 ist zum Aufschrauben der Nippel auf die zweite Speichenreihe vorgesehen und ausgebildet. Die neun Speichen der zweiten Speichenreihe sind diejenigen, die durch die Löcher auf dem gleichen oberen Flansch der Nabe 29 von außen nach innen eingefädelt sind, so dass die Köpfe der Speichen von außen her sichtbar sind. In entsprechender Weise ist der Schrauber 25 zum Aufschrauben der Nippel auf die neun Speichen der dritten Speichenreihe ausgebildet und bestimmt. Der Schrauber 26 schraubt die Nippel auf die Speichen der vierten Speichenreihe auf.

In Fig. 3 sind zwei Rolllager 21 erkennbar. Über den Umfang der Felge 22 verteilt sind mindestens drei Rolllager 21, hier jedoch sogar fünf Rolllager 21, auf etwa gleichem Abstand angeordnet. Vier der Rolllager 21 dienen nur der frei rollenden Aufnahme und Führung der Felge 22, während das zwischen den Schraubern 24 und 25 dargestellte Rolllager 21 auch gleichzeitig den Drehantrieb der Felge 22 um die vertikale Achse der Vorrichtung erbringt.

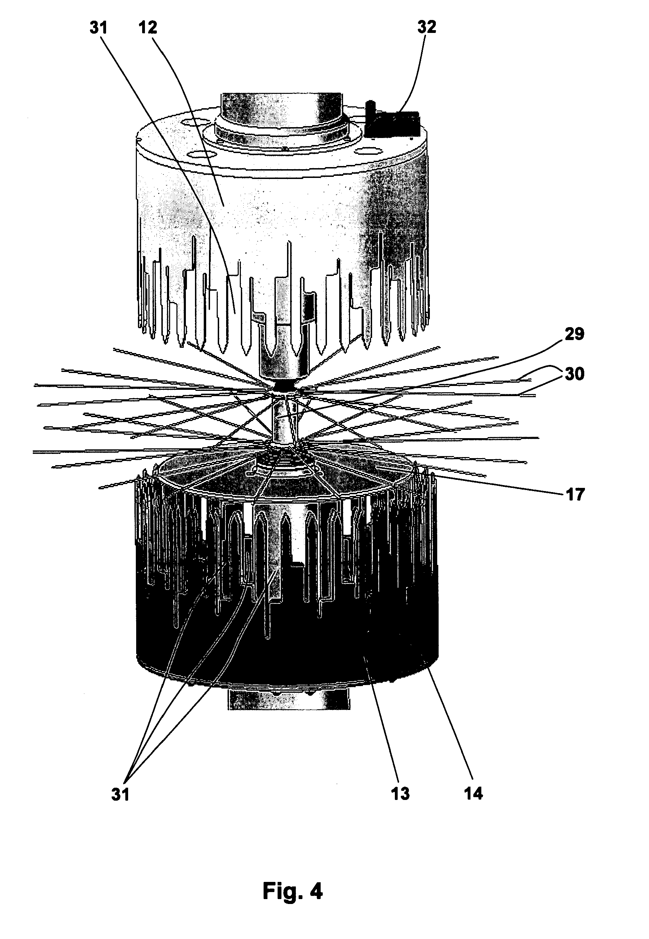

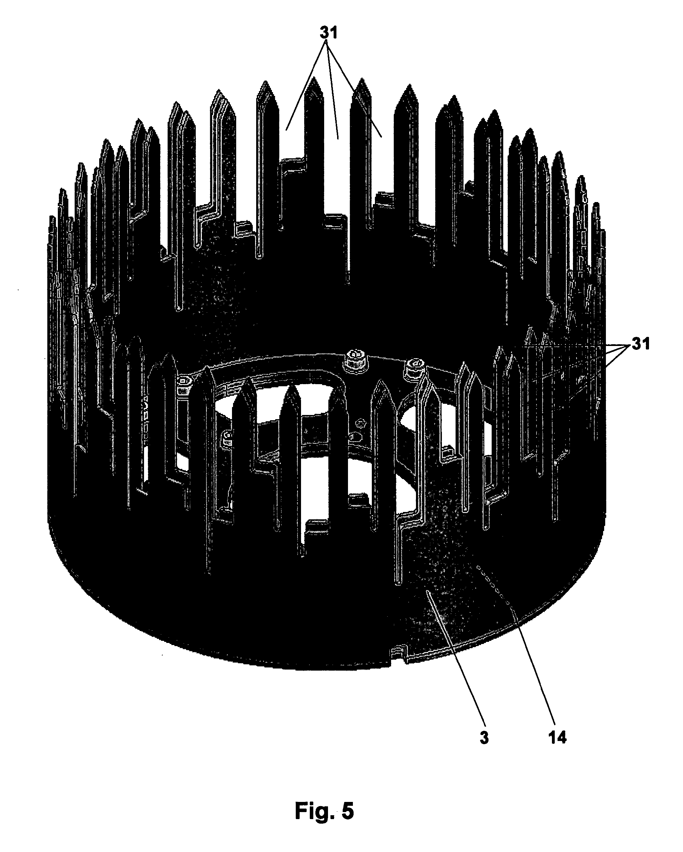

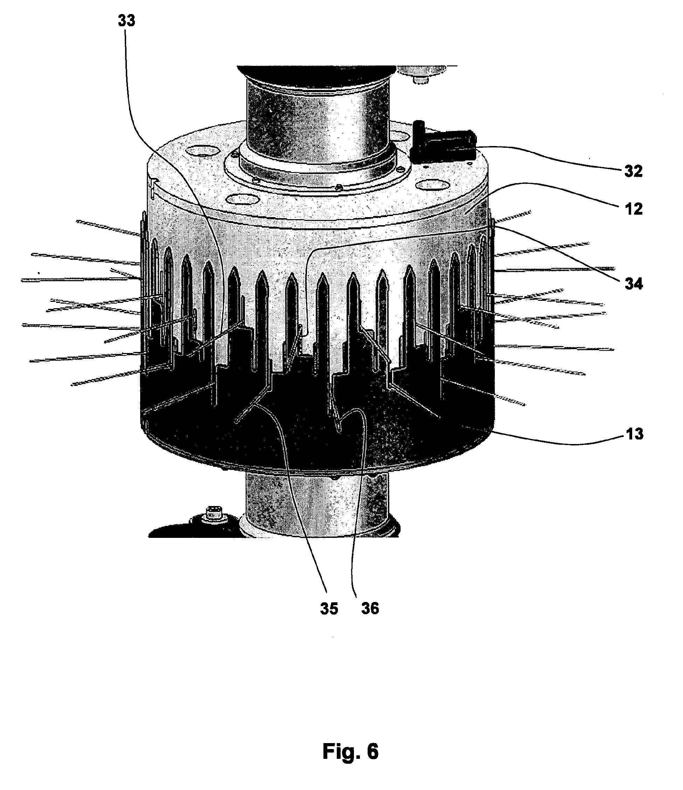

**Fig. 4** verdeutlicht noch einmal gleichsam den Mittelbereich der Darstellung der Fig. 3. Es wird die drehend angetriebene Nabe mit den radial abstehenden Speichen 30 in der Aufnahmeeinrichtung 17 erkennbar. Die beiden unteren Kronen 13 und 14, die in Fig. 5 noch einmal in Alleinstellung dargestellt sind, sind besonders gut erkennbar. Die untere Krone 13 weist einen größeren Durchmesser auf als die innere Krone 14. Alle Kronen 12, 13, 14 sind mit sich axial erstreckenden Schlitzen 31 versehen, die die aus den Zeichnungen ersichtliche Formgebung aufweisen. Die Schlitze 31 der beiden unteren Kronen 13 und 14 decken sich im Wesentlichen in radialer Richtung. Die Schlitze 31 in der oberen Krone 12 sind den Schlitzen 31 in den unteren Kronen 13 und 14 so zugeordnet, dass die Schlitze 31 sämtlicher Kronen 12, 13, 14 zusammenwirken. Die Gestaltung dieser aufeinander abgestimmten Schlitze 31 dient dem Fangen der radial abstehenden Speichen 30 während des Rotationsantriebs der Nabe 29. Zu diesem Zweck werden die obere Krone 12 und die unteren Kronen 13 und 14 ebenfalls über separat steuerbare, aber kuppelbare Antriebe rotierend angetrieben. Auf der oberen Krone 12 ist eine erste Messvorrichtung 32 zum Erfassen der Winkellage der Speichen der ersten und der zweiten Speichenreihe vorgesehen. Die Messvorrichtung 32 kann als Längenmessvorrichtung ausgebildet sein, mit der der Abstand zwischen der Messvorrichtung 32 und der Ebene feststellbar ist, in der die Speichen der ersten Speichenreihe rotieren. Gleiches gilt für die Speichen der zweiten Speichenreihe. Damit ist die jeweilige Winkelstellung der Speichen nachverfolgbar, und es ergibt sich die Möglichkeit, die obere Krone 12 und dann letztlich auch in Abhängigkeit davon die unteren Kronen 13 und 14 mit ihren Drehantrieben so zu beschleunigen oder zu verzögern, dass sich übereinstimmende Drehzahlen an der Nabe 29 und an den Kronen 12, 13 und 14 ergeben, und zwar so, dass beim Zusammenfahren der Kronen 12, 13 und 14 die Spitzen der Kronen zwischen den Schlitzen 31 in die Freiräume zwischen den Speichen 30 eingreifen. Damit werden die Speichen 30 durch das axiale gezielte Zusammenfahren der Kronen 12 und 13 und 14 gefangen. **Fig. 6** zeigt eine perspektivische Darstellung der Teile und der Speichen 30 zueinander kurz vor dem Erreichen der maximal zusammengefahrenen Stellung zwischen den Kronen 12 einerseits und den Kronen 13 und 14 andererseits. In Fig. 6 sind die Speichen 33 der ersten und damit obersten Speichenreihe erkennbar. Man erkennt, dass sich die Speichen 33 und 34 der ersten und zweiten Speichenreihe auf der Oberseite des zu erstellenden Rades noch in einer gemeinsamen Ebene befinden. Ebenso befinden sich die Speichen 35 und 36 der dritten und vierten Speichenreihe noch auf einer gemeinsamen Ebene, jedoch in der Höhe versetzt zu den Speichen 33 und 34 der ersten und zweiten Speichenreihe. Die Ausbildung der Schlitze 31 mit ihren Ausbuchtungen und Vertiefungen, wie sie aus den Fig. 4 bis 6 erkennbar ist, lässt weiterhin erkennen, dass beim weiteren Zusammenfahren der oberen Krone 12 und der unteren Kronen 13 und 14 über die in Fig. 6 dargestellte Zwischenstellung in die maximal angenäherte Stellung hinein die Speichen 33 in eine obere Ebene abgehoben abgespreizt werden, während die neun Speichen der zweiten Speichenreihe 34 in der in Fig. 6 erkennbaren Ebene verbleiben. Entsprechend werden die neun Speichen der Speichen 35 der dritten Speichenreihe in eine andere horizontale Ebene verbracht relativ zu den neun Speichen 36 der vierten Speichenreihe. Man kann sich leicht vorstellen, dass in der maximal zusammengefahrenen Stellung der Kronenanordnung 11 die freien Enden der Speichen 33 der ersten Speichenreihe in einer ersten oberen Ebene zu liegen kommen, darunter die neun freien Enden der Speichen 34 der zweiten Speichenreihe, darunter die freien Enden der neun Speichen 35 der dritten Speichenreihe und schließlich zuunterst die neun Speichen 36 der vierten Speichenreihe. Damit sind die Speichen der vier Speichenreihen mit ihren freien Endbereichen in unterschiedlich hoch angesiedelten horizontalen Ebenen fixiert.

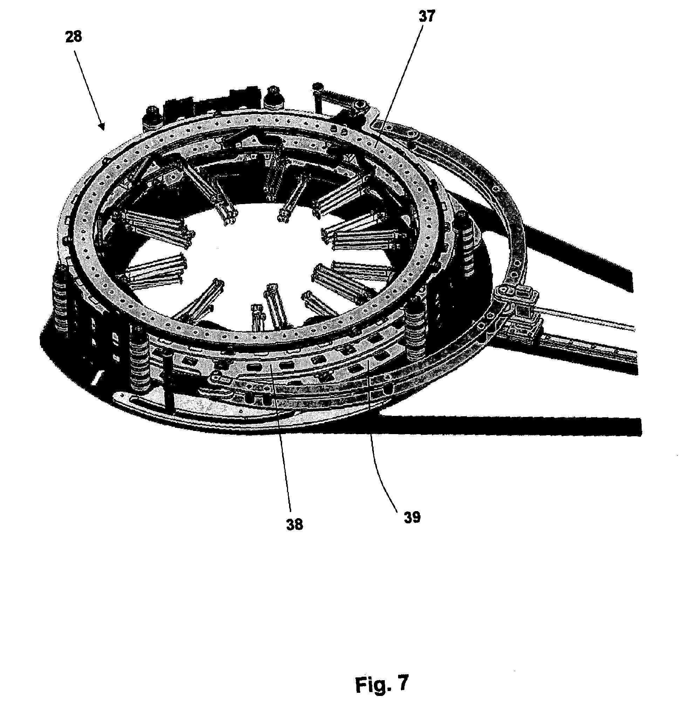

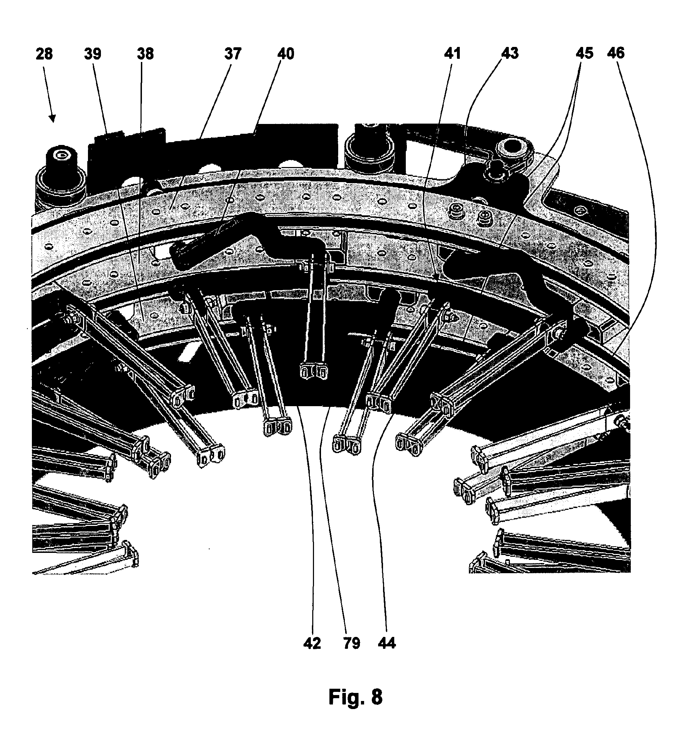

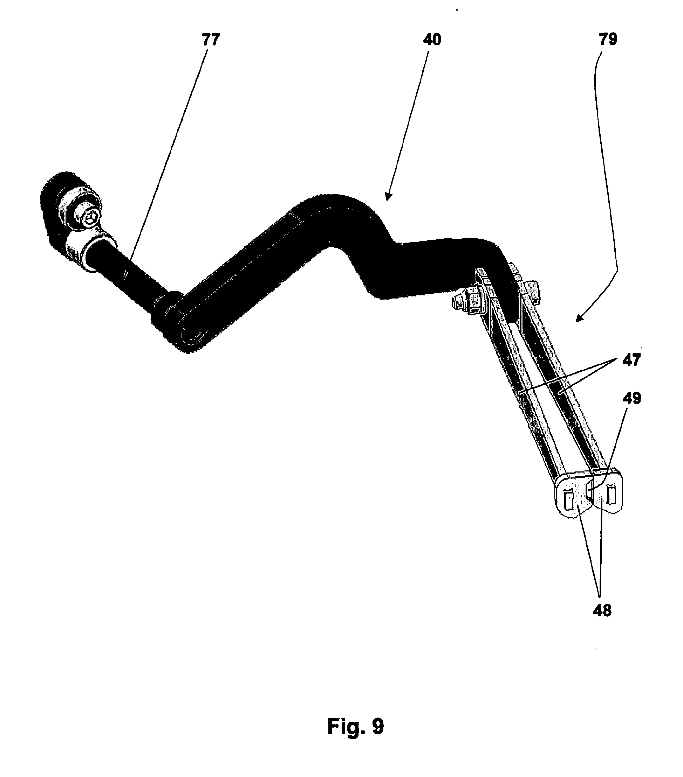

In dieser fixierten und festgehaltenen Stellung der Speichen 33, 34, 35 und 36 wird die Kronenanordnung 11 durch Ausfahren auch der Kolbenstangen der Pneumatikzylinder 7 in die Flechtebene 10 angehoben, so dass die Einheit aus Nabe 29 mit den winkelmäßig und höhenmäßig festgelegten einzelnen Speichen 30 in den Bereich des Flechters 28 gelangen. Der Flechter 28 ist in perspektivischer Gesamtdarstellung in Fig. 7 erkennbar. Fig. 8 zeigt einen Ausschnitt aus dem Flechter in vergrößernder Darstellung und Fig. 9 zeigt ein einzelnes Element des Flechters 28.

Der in **Fig. 7** dargestellte Flechter 28 besitzt axial höhenversetzt mehrere Lagerringe, und zwar einen oberen Lagerring 37. Unter dem Lagerring 37 befindet sich ein Lagerring 38 und unter diesem ein Lagerring 39. Jeder Lagerring 37, 38, 39 ist für die Betätigung von Flechthebeln vorgesehen und bestimmt. Mit dem Lagerring 37 stehen Flechthebel 40 für die Speichen 33 der ersten Speichenreihe in Wirkverbindung. Mit dem Lagerring 38 stehen Flechthebel 41 in Wirkverbindung, die für die Speichen 34 und 35 der zweiten und dritten Speichenreihe ausgebildet die neun Fangärmchen 79 für die Speichen 35 der dritten Speichenreihe und noch weiter darunter die neun Fangärmchen 79 für die Speichen 36 der vierten Speichenreihe. Damit wird erkennbar, dass die Speichen 30 sämtlicher Speichenreihen in der durch die maximal zusammengefahrenen Kronen 12, 13 und 14 fixierten Winkel- und Höhenstellung durch das Einfahren in den Bereich des Flechters 28 gleichzeitig und höhenversetzt in die Hände 48 der jeweiligen Fangärmchen 79 eingeclipt werden. Dann werden die Kronen 12, 13 und 14 der Kronenanordnung auseinandergefahren, so dass sie aus dem Bereich des Flechters 28 herausgelangen und die nachfolgende Flechtbewegung für sämtliche Speichen um die Vertikalachse der Vorrichtung nicht behindern. Es wird die bekannte Flechtstellung sämtlicher Speichen 30 zueinander erreicht. Sobald diese geflochtene Stellung erreicht ist, wird die Kronenanordnung 11 mit den getrieblich gekoppelten Kronen 12, 13 und 14 um 5° gedreht und die Kronen über die durch die Fangärmchen 79 zunächst noch gehaltene Flechtstellung geschoben, so dass diese Flechtstellung durch die zusammengefahrenen Kronen fixiert ist. Anschließend wird die geflochtene Einheit aus Nabe 29 und Speichen 30 mit Hilfe der Kronenanordnung 11 bzw. des nach unten fahrenden Schlittens 3 aus den Händen 48 der Fangärmchen 79 herausgelöst und in die Einspeichebene 9, also die unterste Arbeitsebene relativ zu der dort verweilenden Felge 22 verbracht. Die Felge 22 ist mit Hilfe einer nicht dargestellten zweiten Messeinrichtung in ihrer Winkelstellung in Zuordnung zu den Schraubern 23, 24, 25 und 26 so verdreht worden und die Kronenanordnung 11 wird in einer solchen Relativlage in die Einspeichebene 9 verfahren, dass die freien Enden der Speichen 30 auf die Löcher in der Felge vorausgerichtet sind. Damit die Speichen 30 beim Einfahren in den Innenraum der Felge 22 die innere Oberfläche nicht verkratzen, werden die Speichen 30 durch das Zusammenfahren der Kronen 12, 13 und 14 in einem ersten Biegevorgang krumm gebogen. Dadurch verkürzt sich der Abstand zwischen den beiden Enden an jeder Speiche und es ist möglich, die fixierte Flechtstellung der Speichen beschädigungsfrei in den Innenraum der Felge 22 einzubringen.

In der untersten Arbeitsebene, der Einspeichebene 9, werden die Nippel auf die mit Gewinde versehenen Enden der Speichen 30 aufgedreht. Es werden gleichzeitig immer vier Nippel auf je eine Speiche jeder Speichenreihe aufgedreht. Mit dem Schrauber 23 wird ein Nippel auf eine Speiche 33 der ersten Speichenreihe aufgedreht. Mit dem Schrauber 24 wird ein Nippel auf eine Speiche 34 der zweiten Speichenreihe aufgeschraubt. Mit dem Schrauber 35 wird ein Nippel auf eine Speiche 35 der dritten Speichenreihe aufgeschraubt und mit dem Schrauber 26 wird ein Nippel auf eine Speiche 36 der vierten Speichenreihe aufgeschraubt. Sodann wird die Felge 22 um einen Takt gedreht. Dies geschieht mit Hilfe des Antriebs des einen Rolllagers 21. Dann werden und bestimmt sind. Der Lagerring 39 betätigt Flechthebel 42, die den Speichen 36 der vierten Speichenreihe zugeordnet sind. Zwischen den Lagerringen 37 und 38 befindet sich eine Schwenkplatte 43, die mit einem Schwenkantrieb für die Flechthebel der ersten und vierten Speichenreihe verbunden ist. Hierzu gehört auch eine Schwenkplatte 44. Die Schwenkplatten 43 und 44 werden gemeinsam über einen Schwenkantrieb 45 angetrieben, so dass damit die Flechthebel 40 und 42 der ersten und vierten Speichenreihe betätigt werden können. Entsprechend ist ein Schwenkantrieb 46 für die Flechthebel 41 vorgesehen, die der zweiten und dritten Speichenreihe zugeordnet sind. Wenn die Schwenkplatten und Lagerringe gemeinsam gedreht werden, legen die Flechthebel einen Weg in einer Horizontalebene tangential zur vertikalen Achse des Flechters 28 zurück. Wenn die betreffenden Schwenkplatten und Lagerringe gegeneinander gedreht werden, verschwenken die Flechthebel, so dass ihre Enden eine Schwenkbewegung ausführen, verbunden mit einer Höhenbewegung, also in axialer Richtung. Es ist erkennbar, dass die erste tangentiale Bewegung dem Flechtvorgang der Speichen 30 ineinander gilt, solange die Speichen in unterschiedlichen Arbeitsebenen gekreuzt werden. Dies ist der Fall, wenn beispielsweise eine Speiche der ersten Speichenreihe über zwei benachbarte Speichen der zweiten Speichenreihe verkreuzt wird. Anschließend muss dann eine dritte benachbarte Speiche der zweiten Speichenreihe mit der betreffenden Speiche der ersten Speichenreihe unterschritten werden. Hierfür ist die axiale Bewegung und damit die Höhenverschwenkung des Flechthebels erforderlich.

Jeder Flechthebel 40, 41, 42 ist mit Fangärmchen 79 ausgestattet. In **Fig. 9** ist der Flechthebel 40 für die erste Speichenreihe in Einzeldarstellung gezeigt. Der Flechthebel 40 ist an seinem einen Ende mit einer Tragachse 77 versehen, um die der Flechthebel 40 schwenkbar ist, um die Axialbewegung in vertikaler Richtung herbeizuführen. Am anderen Ende des Flechthebels 40 sind die Fangärmchen 79 gebildet. Diese bestehen aus zwei Blattfedern 47, die an ihren freien Enden zwei Hände 48 tragen. Die Hände 48 bilden miteinander einen Schlitz 49 zur Aufnahme je einer Speiche 30 (in Fig. 9 nicht dargestellt). Der Schlitz 49 umgreift die betreffende Speiche 30 locker und ohne Einklemmung, so dass sich die betreffende Speiche 30 in dem Schlitz 49 während des Flechtvorgangs verschieben bzw. verlagern kann.

Aus **Fig. 8** ist erkennbar, wie die Fangärmchen 79 mit ihren Händen 48 in verschiedenen horizontalen Ebenen übereinander innerhalb des Flechters 28 in der Ausgangsstellung positioniert sind. Die Fangärmchen 79, die die neun Speichen der ersten Speichenreihe aufzunehmen haben, befinden sich in einer vergleichsweise obersten horizontalen Ebene. Unterhalb dieser Ebene befinden sich die neun Fangärmchen 79 für die Speichen 34 der zweiten Speichenreihe, darunter zeitgleich vier weitere Nippel auf vier Speichen aufgeschraubt. Dieser Schraubvorgang wiederholt sich also insgesamt neun Mal, bis sämtliche 36 Nippel auf die 36 Speichen aufgeschraubt sind. Dann öffnet die Vorrichtung 1 und das fertig eingespeichte Rad kann entnommen werden.

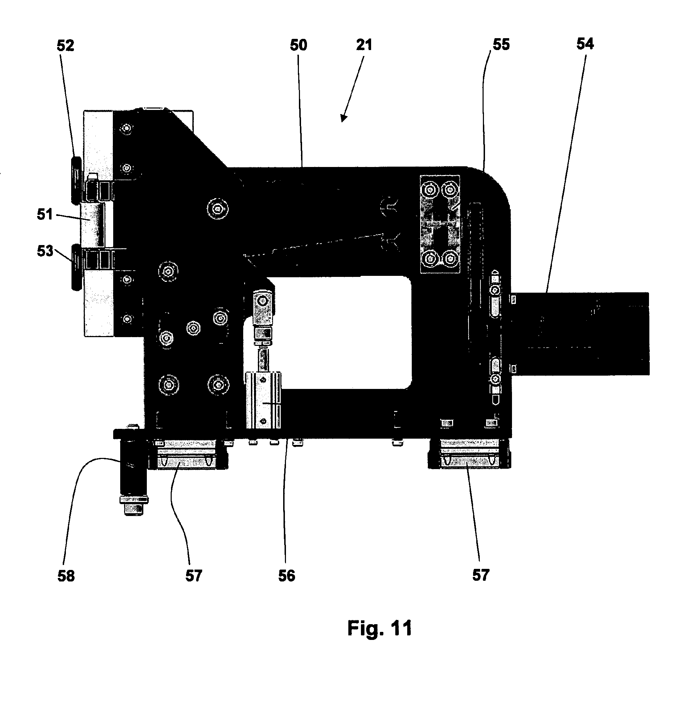

**Fig. 11** verdeutlicht in Seitenansicht das eine Rolllager 21, welches zum Antrieb der Felge ausgebildet und angeordnet ist. In einem entsprechenden Rahmen ist eine Rolle 51 frei drehbar gelagert, die am Umfang der Felge 22 anliegt. In Zuordnung dazu ist eine obere Rolle 52 und eine untere Rolle 53 vorgesehen. Die beiden Rollen 52 und 53 sind gegenläufig vertikal bewegbar, so dass zwischen den drei Rollen 51, 52, 53 jede Felge 22 auch mit unterschiedlichen Felgenbreiten mit festliegender Mittelebene aufgenommen wird, so dass eine Zuordnung der Löcher der Felge für den Durchtritt der Nippel gegeben ist. Die Rollen 52 und 53 werden gegenläufig angetrieben, wodurch die Felge 22 gedreht wird. Die anderen vier Rolllager 21 sind entsprechend ausgebildet und besitzen ebenfalls die Rollen 51, 52 und 53, nur mit dem Unterschied, dass dort sämtliche Rollen freiliegend, drehbar und nicht angetrieben sind. Der Antrieb des Rolllagers 21 gemäß Fig. 11 erfolgt über einen Motor 54 und ein Getriebe 55 sowie zwei Antriebswellen im Inneren des Rahmens 50. Für den gegenläufigen Vertikalantrieb der Rollen 52 und 53 ist ein Zylinder 56 vorgesehen. Der Rahmen 50 ist auf zwei Führungswagen 57 gelagert und mit einer Positionierrolle 58 versehen, die in einer Schlitzführung gelagert ist, so dass die Rolllager 21 gemeinsam so nach außen oder innen gefahren werden können, wie es unterschiedliche Felgendurchmesser für unterschiedliche Laufraddurchmesser erfordern.

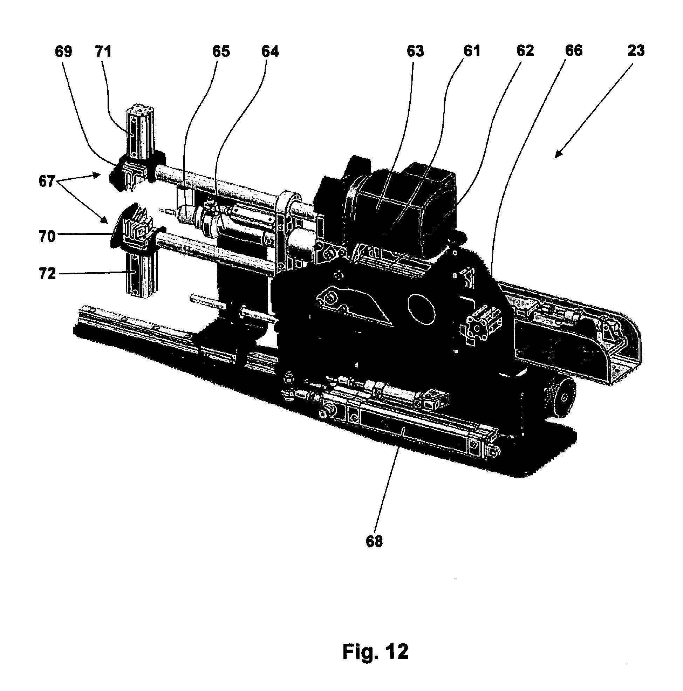

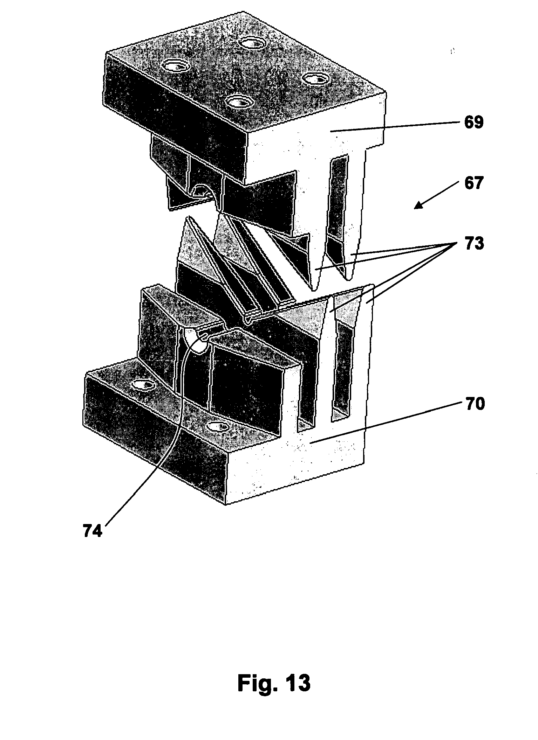

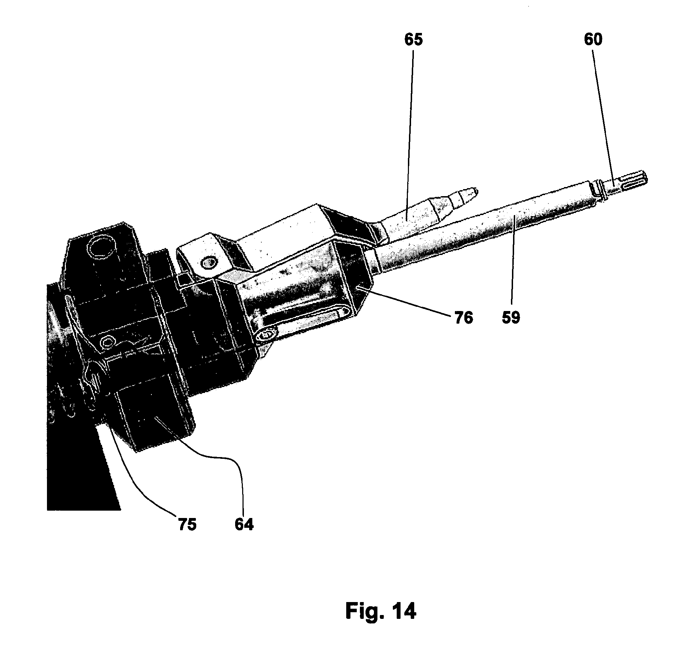

**Fig. 12** zeigt einen Schrauber 23, wobei jedoch alle Schrauber 23, 24, 25, 26 weitgehend identisch ausgebildet sind. Jeder Schrauber besitzt eine Schrauberklinge 59 zum Angriff an einem Nippel 60 (Fig. 14). Die Ausbildung der Schrauber basiert auf einer schwimmenden Lagerung auf einem Kreuzgelenk 61, welches aus Fig. 12 erkennbar ist. Die Schrauberklinge 59 ist mit einer Keilwelle 62 drehfest verbunden, die über einen Motor 63 gedreht wird. In einem Gehäuse 64 ist die Schrauberklinge 59 untergebracht, die in bekannter Weise von einer Seele durchsetzt wird. Am Gehäuse 64 ist ein abklappbarer Lochsucher 65 vorgesehen, der zur Arbeitsachse des Schraubers 23 einklappbar (Fig. 12) bzw. abklappbar (Fig. 14) gelagert ist. Der Lochsucher 65 fährt in jedes Loch in der Felge nachjustierend ein, wobei sich der gesamte jeweilige Schrauber 23 ausrichtet. Zur Fixierung der Stellung des über den Lochsucher 65 mit seiner Arbeitsachse ausgerichteten Schraubers ist ein Zylinder 66 zum Festklemmen der Achsposition des Schraubers vorgesehen. An jedem Schrauber 23 ist auch eine Prismenanordnung 67 vorgesehen, die geteilt ausgebildet ist und über einen Zylinder 68 radial in den Innenraum der Felge 22 einfahrbar bzw. ausfahrbar ist. Jede Prismenanordnung 67 weist obere Prismen 69 und untere Prismen 70 auf. Es sind Zylinder 71 und 72 vorgesehen, um die Prismen 69 und 70 in axialer Richtung, also in der Höhe auseinanderzufahren oder zusammenzufahren. Die Prismen 69 und 70 der Prismenanordnung 67 sind in **Fig. 13** in auseinandergefahrenem Zustand perspektivisch verdeutlicht. Es ist erkennbar, dass die Prismen 69 und 70 zunächst vier Prismenstege 73 aufweisen, die über eine gewisse Länge im Endbereich der Speiche (in Fig. 13 nicht dargestellt) reichen. Diese Anordnung der Prismenstege 73 zielt darauf ab, den Endbereich jeder Speiche 30 durch den Schließvorgang der Prismenanordnung 67 in einer zweiten Verbiegung so zu verbiegen, dass die Speichenachse mit der Arbeitsachse des Schraubers fluchtet. Darüber hinaus bilden die geteilten Prismen 69, 70 ein Aufnahmeloch 74 für den Nippel 60. Der Nippel 60 wird hier zusätzlich und relativ zu dem Speichenende während des Aufschraubvorgangs geführt.

**Fig. 14** lässt am Gehäuse 64 des Schraubers ein Loch 75 erkennen, über welches ein Nippel in bekannter Weise in das Innere des Gehäuses 64 und letztlich in ein Mundstück 76 gelangt. Der betreffende Nippel 60 wird zunächst in dem Mundstück 76 federnd gehalten und zur Durchführung des Aufschraubvorgangs von der vorwärtsgeschobenen Schrauberklinge 59 aus dem Mundstück 76 heraus in das Aufnahmeloch 74 verschoben und dort auf das mit Gewinde versehene Ende jeder Speiche 30 aufgeschraubt. Während des Aufschraubvorgangs wandert die Speiche in den Nippel 60 ein und berührt hier eine Seele in der Schrauberklinge 59. Diese Seele ist mit einem Schalter verbunden, der den Schraubvorgang abschaltet, also den Motor 63 stillsetzt.

### BEZUGSZEICHENLISTE

- 1: Vorrichtung
- 2: Rahmen
- 3: Schlitten
- 4: Führungsstange
- 5: Führungsstange
- 6: Pneumatikzylinder
- 7: Pneumatikzylinder
- 8: Einlegeebene
- 9: Einspeichebene
- 10: Flechtebene
- 11: Kronenanordnung
- 12: obere Krone
- 13: untere Krone
- 14: untere Krone
- 15: Zylinder
- 16: Zylinder
- 17: Aufnahmeeinrichtung
- 18: Zylinder
- 19: Antriebsmotor
- 20: Grundplatte
- 21: Rolllager
- 22: Felge
- 23: Schrauber
- 24: Schrauber
- 25: Schrauber
- 26: Schrauber
- 27: Motor
- 28: Flechter
- 29: Nabe
- 30: Speiche

- 31: Schlitz
- 32: Messvorrichtung
- 33: Speiche
- 34: Speiche
- 35: Speiche
- 36: Speiche
- 37: Lagerring
- 38: Lagerring
- 39: Lagerring
- 40: Flechthebel
- 41: Flechthebel
- 42: Flechthebel
- 43: Schwenkplatte
- 44: Schwenkplatte
- 45: Schwenkantrieb
- 46: Schwenkantrieb
- 47: Blattfeder
- 48: Hand
- 49: Schlitz
- 50: Rahmen
- 51: Rolle
- 52: Rolle
- 53: Rolle
- 54: Motor
- 55: Getriebe
- 56: Zylinder
- 57: Führungswagen
- 58: Positionierrolle
- 59: Schrauberklinge
- 60: Nippel

- 61: Kreuzgelenk
- 62: Keilwelle
- 63: Motor
- 64: Gehäuse
- 65: Lochsucher
- 66: Zylinder
- 67: Prismenanordnung
- 68: Zylinder
- 69: Prismen
- 70: Prismen

- 71: Zylinder
- 72: Zylinder
- 73: Prismensteg
- 74: Aufnahmeloch
- 75: Loch
- 76: Mundstück
- 77: Tragachse
- 78: Zylinder
- 79: Fangärmchen

## Patentansprüche

1. Verfahren zum Einspeichen eines Rades aus einer Felge, einer Mehrzahl Nippeln und einer Nabe mit eingefädelten Speichen, indem die Nabe mit den eingefädelten Speichen eingespannt und in Drehung versetzt und dabei die Speichen unter Fliehkrafteinwirkung radial von der Nabe abstehend ausgerichtet und die radial abstehenden rotierenden Speichen mit einer Kronenanordnung aus mindestens zwei gegenläufig verfahrbaren und die Speichen beidseitig der Radebene einschließenden Kronen aufgefangen werden, die Einheit aus festgespannter Nabe und Speichen mit der Kronenanordnung in eine Flechtebene transportiert und dort die eingefädelten Speichen sich radseitig kreuzend reihenweise gegenläufig gleichzeitig geflochten werden, und die Einheit aus Nabe und gekreuzten Speichen mit der Kronenanordnung in den Innenraum der Felge in einer Einspeichebene transportiert und mehrere Nippel durch Felgenlöcher hindurch auf die Enden der Speichen gleichzeitig lose aufgeschraubt werden.

2. Verfahren nach Anspruch 1, **dadurch gekennzeichnet, dass** die geflochtenen Speichen vor dem Einbringen in den Innenraum der Felge gemeinsam für jede Radseite in einen gebogenen Zustand überführt werden.

3. Verfahren nach Anspruch 1 oder 2, **dadurch gekennzeichnet, dass** die freien Enden der Speichen gruppenweise durch Biegung fluchtend zu den Arbeitsachsen einer Mehrzahl von Schraubern ausgerichtet werden.

4. Verfahren nach mindestens einem der Ansprüche 1 bis 3, **dadurch gekennzeichnet, dass** die Nabe mit den eingefädelten Speichen in einer Einlegeebene in eine Aufnahmeeinrichtung eingelegt wird, dass die Felge in einer zur Einlegeebene höhenversetzten Einspeichebene eingelegt wird, und dass das Flechten in einer zur Einlegeebene und zur Einspeichebene höhenversetzten Flechtebene durchgeführt wird.

5. Vorrichtung zum Einspeichen eines Rades aus einer Felge (22), einer Mehrzahl Nippeln (60) und einer Nabe (29) mit eingefädelten Speichen (30), mit einer Aufnahmeeinrichtung (17) zum Festlegen der Achse der Nabe (29), mindestens drei Führungsrollen (51) für eine drehbare Lagerung der Felge (22) in einer Einspeichebene (9) mit etwa horizontal angeordneter Radebene, einem in eine Schraubstelle einbringbaren Positionieranschlag für das mit Gewinde versehene Ende der Speiche (30) sowie einem in einer Arbeitsachse in Aufdrehrichtung verfahrbarer Schrauber (23, 24 usw.) zum Aufdrehen eines Nippels (60) auf das Ende einer Speiche (30) und einem angetriebenen Lochsucher (65) für die Löcher in der Felge, der in der gemeinsamen Arbeitsachse des Schraubers (23 usw.) und des Positionieranschlages verfahrbar und aus dieser Arbeitsachse herausbringbar vorgesehen ist, wobei eine Einlegestation (Einlegeebene 8) zum Spannen und Drehen der Nabe (29), eine Flechtstation (Flechtebene 10) zum gleichzeitigen gegenläufigen Kreuzen der Speichenreihen der beiden Radseiten und eine Einspeichstation (Einspeichebene 9) zum Einlegen der Felge (22) und zum Aufschrauben der Nippel (60) in drei voneinander beabstandet vorgesehenen Arbeitsebenen (8, 9, 10) angeordnet sind, und eine axiale Schlitze (31) aufweisende Kronenanordnung (11) aus mindestens zwei vertikal gegenläufig verfahrbaren Kronen (12, 13) zum Fangen der Speichen (33, 34, 35, 36) und zum Verbringen der Einheit aus Nabe (29) und Speichen (33, 34, 35, 36) in die drei Arbeitsebenen (8, 9, 10) vorgesehen ist.

6. Vorrichtung nach Anspruch 5, **dadurch gekennzeichnet, dass** die axialen Schlitze (31) der Kronenanordnung (11) aus mindestens zwei vertikal gegenläufig verfahrbaren Kronen (12, 13) so gestaltet und angeordnet sind, dass einerseits vier unterschiedliche Ebenen für die Fixierung der vier Speichenreihen nach dem Fangen und andererseits eine fünfte Ebene zur Fixierung der geflochtenen Stellung gebildet werden.

7. Vorrichtung nach Anspruch 5 oder 6, **dadurch gekennzeichnet, dass** eine an der Nabe (29) angreifende Spanneinrichtung für die Einheit aus Nabe und eingefädelten Speichen (30) und ein Drehantrieb für die Spanneinrichtung vorgesehen sind.

8. Vorrichtung nach mindestens einem der Ansprüche 5 bis 7, **dadurch gekennzeichnet, dass** separat steuerbare Drehantriebe für die Spanneinrichtung, für die Kronen (12, 13) und für die Felge (22) vorgesehen sind.

9. Vorrichtung nach mindestens einem der Ansprüche 5 bis 8, **dadurch gekennzeichnet, dass** in der Flechtstation Fangärmchen (79) zur Übernahme der Speichen (33, 34, 35, 36) in der radialen Stellung vorgesehen sind, die zu vier Gruppen entsprechend der vier Speichenreihen gemeinsam tangential und axial zur Achse der Nabe (29) bewegbar sind.

10. Vorrichtung nach mindestens einem der Ansprüche 5 bis 9, **dadurch gekennzeichnet, dass** eine erste Messvorrichtung (32) zum Erfassen der Winkellage der ersten und der zweiten Speichenreihe in rotierendem Zustand und eine zweite Messvorrichtung zum Erfassen der Winkellage der Felge (22) mit ihrem Ventilloch vorgesehen sind.

11. Vorrichtung nach mindestens einem der Ansprüche 5 bis 10, **dadurch gekennzeichnet, dass** die Fangärmchen (45) in der Flechtstation an Flechthebeln 40, 41, 42) angeordnet sind, die entsprechend der vier Speichenreihen an mindestens drei Lagerringen (37, 38, 39) gelagert sind.

12. Vorrichtung nach mindestens einem der Ansprüche 5 bis 11, **dadurch gekennzeichnet, dass** der Positionieranschlag eine geteilte Prismenanordnung (67) aufweist, deren Teilprismen (69, 70) in Richtung der Speichen beabstandet positioniert und axial gegenläufig verfahrbar angeordnet sind.

13. Vorrichtung nach mindestens einem der Ansprüche 5 bis 12, **dadurch gekennzeichnet, dass** die den Positionieranschlag bildende Prismenanordnung (67) ein geteiltes Nippelführungsloch (74) aufweist.

14. Vorrichtung nach mindestens einem der Ansprüche 5 bis 13, **dadurch gekennzeichnet, dass** die Kronenanordnung (11) zwei drehfest miteinander verbundene untere Kronen (13, 14) und eine obere Krone (12) aufweist, wobei die obere Krone (12) axial zwischen die beiden unteren Kronen (13, 14) einfahrbar ausgebildet ist.

15. Vorrichtung nach mindestens einem der Ansprüche 5 bis 14, **dadurch gekennzeichnet, dass** die Drehantriebe für die Kronen (12, 13, 14) der Kronenanordnung (11) auf eine im Winkel einander zugeordnete Relativstellung einsteuerbar und synchron drehbar ausgebildet sind.

16. Vorrichtung nach mindestens einem der Ansprüche 5 bis 15, **dadurch gekennzeichnet, dass** die synchron miteinander verbundenen Kronen (12, 13, 14) der Kronenanordnung (11) in Umfangsrichtung gemeinsam um 5° bewegbar sind.

17. Vorrichtung nach mindestens einem der Ansprüche 5 bis 16, **dadurch gekennzeichnet, dass** die Fangärmchen (79) in der Flechtstation paarweise gegeneinander federnd gelagert sind und zum Flechten der Speichen (z. B. 33) einer Speichenreihe über zwei in Umfangsrichtung benachbarte Speichen (z.B. 34) und unter einer weiteren in Umfangsrichtung benachbarten Speiche hindurch gesteuert bewegbar sind.

18. Vorrichtung nach mindestens einem der Ansprüche 5 bis 17, **dadurch gekennzeichnet, dass** in der Einspeichstation vier schwimmend gelagerte Schrauber (23, 24, 25, 26) zum gleichzeitigen Aufschrauben von vier Nippeln (60) auf je eine Speiche der vier Speichenreihen vorgesehen sind.

19. Vorrichtung nach mindestens einem der Ansprüche 5 bis 18, **dadurch gekennzeichnet, dass** jeder Schrauber (23, 24, 25, 26) einen Lochsucher (65) zum Nachjustieren der Arbeitsachse relativ zum jeweiligen Loch in der Felge (22) aufweist.

20. Vorrichtung nach mindestens einem der Ansprüche 5 bis 19, **dadurch gekennzeichnet, dass** jeder Schrauber (23, 24, 25, 26) einen Tastroller zur Anlage an der Felge (22) aufweist.
